# EUROPEAN PATENT APPLICATION

(11) **EP 4 790 637 A2**
(43) Date of publication of application: **12.08.2026**
(21) Application number: 26187738.5
(22) Date of filing: 25.06.2026
(51) Int. Cl.: G06T 5/60

(54) **IMAGE CONTRAST ENHANCEMENT METHOD AND APPARATUS, READABLE STORAGE MEDIUM, AND ELECTRONIC DEVICE**

(30) Priority: 27.03.2026 CN 202610398072
(71) Applicant: XG TECH PTE. LTD., Singapore 179098 (SG)
(72) Inventor: LIN, Tao, 179098 Singapore (SG); BAI, Yulong, 179098 Singapore (SG)
(74) Representative: Patentanwälte Magenbauer & Kollegen Partnerschaft mbB

(57) **Abstract**

The present disclosure provides an image contrast enhancement method and apparatus, a readable storage medium, and an electronic device. The method includes: acquiring a raw image on which contrast enhancement is to be performed; performing contrast enhancement on the raw image to obtain an initial contrast-enhanced image; processing the raw image by a pre-trained fusion coefficient estimation model, to obtain a fusion coefficient map; and fusing the initial contrast-enhanced image and the raw image by fusion coefficients included in the fusion coefficient map, to obtain a fused contrast-enhanced image. In this way, contrast enhancement is implemented based on texture intensities of different regions in the image.

## Description

### FIELD OF THE INVENTION

The present disclosure relates to digital image processing technologies and computer vision technologies, and in particular, to an image contrast enhancement method and apparatus, a readable storage medium, and an electronic device.

### BACKGROUND OF THE INVENTION

Image contrast enhancement, also referred to as contrast stretching or gray-scale stretching, is a fundamental and critical image processing technique. A core objective of the image contrast enhancement is to change a grayscale value of each pixel in an input image point by point through a specific transformation function, to stretch or compress a range of pixel luminance values originally concentrated in a narrow dynamic interval, so as to enlarge luminance differences between different objects, making details in the image more apparent and visual effects clearer.

Related image contrast enhancement methods include global histogram equalization and other methods. When processing an image with complex content, these methods apply a uniform transformation to the entire image, and thus ignoring differences in content characteristics between different regions.

### SUMMARY OF THE INVENTION

To resolve the foregoing technical problem, the present disclosure provides an image contrast enhancement method and apparatus, a readable storage medium, and an electronic device, to resolve problems that noise amplification and over-enhancement easily occur in a flat region in an image, and a contrast enhancement intensity of a texture region is insufficient.

According to a first aspect of an embodiment of the present disclosure, an image contrast enhancement method is provided, including: acquiring a raw image on which contrast enhancement is to be performed; performing contrast enhancement on the raw image to obtain an initial contrast-enhanced image; processing the raw image by a pre-trained fusion coefficient estimation model, to obtain a fusion coefficient map with fusion coefficients for reducing a contrast enhancement intensity of a flat region in the raw image and increasing a contrast enhancement intensity of a texture region in the raw image; and fusing the initial contrast-enhanced image and the raw image by the fusion coefficients included in the fusion coefficient map, to obtain a fused contrast-enhanced image.

According to a second aspect of an embodiment of the present disclosure, an image contrast enhancement apparatus is provided, including: an acquisition module, configured to acquire a raw image on which contrast enhancement is to be performed; an enhancement module, configured to perform contrast enhancement on the raw image to obtain an initial contrast-enhanced image; an estimation module, configured to process the raw image by a pre-trained fusion coefficient estimation model, to obtain a fusion coefficient map with fusion coefficients for reducing a contrast enhancement intensity of a flat region in the raw image and increasing a contrast enhancement intensity of a texture region in the raw image; and a fusion module, configured to fuse the initial contrast-enhanced image and the raw image by the fusion coefficients included in the fusion coefficient map, to obtain a fused contrast-enhanced image.

According to a third aspect of an embodiment of the present disclosure, a computer readable storage medium is provided, where the storage medium stores a computer program, and the computer program is executed to implement the image contrast enhancement method described above.

According to a fourth aspect of an embodiment of the present disclosure, an electronic device is provided. The electronic device includes: a processor; and a memory configured to store instructions executable by the processor, where the processor is configured to read the executable instructions from the memory, and execute the instructions to implement the image contrast enhancement method described above.

According to the image contrast enhancement method and apparatus, the readable storage medium, and the electronic device that are provided in the embodiments of the present disclosure, the initial contrast-enhanced image is obtained by performing contrast enhancement on the raw image; the raw image is processed by the pre-trained fusion coefficient estimation model, to obtain the fusion coefficient map, where the fusion coefficients are used to reduce the contrast enhancement intensity of the flat region in the raw image, and to increase the contrast enhancement intensity of the texture region in the raw image; and finally, the initial contrast-enhanced image and the raw image are fused by the fusion coefficients included in the fusion coefficient map, to obtain the fused contrast-enhanced image. According to the embodiments of this application, contrast enhancement at different degrees is performed for different regions in a targeted manner based on texture intensities of different regions in the image. The fused contrast-enhanced image can effectively reflect differences in content characteristics in the image, so as to avoid noise amplification and over-enhancement of the flat region, and avoid insufficient contrast enhancement of the texture region, thereby enabling texture details to be effectively highlighted and improving adaptability and pertinence of image contrast enhancement.

### BRIEF DESCRIPTION OF THE DRAWINGS

FIG. 1 is a schematic flowchart of an image contrast enhancement method according to an exemplary embodiment of the present disclosure;
FIG. 2 is a schematic flowchart of an image contrast enhancement method according to another exemplary embodiment of the present disclosure;
FIG. 3 is a schematic flowchart of an image contrast enhancement method according to still another exemplary embodiment of the present disclosure;
FIG. 4 is a schematic flowchart of an image contrast enhancement method according to yet another exemplary embodiment of the present disclosure;
FIG. 5 is a schematic flowchart of an image contrast enhancement method according to still yet another exemplary embodiment of the present disclosure;
FIG. 6 is a schematic diagram of a structure of an image texture estimation model according to an exemplary embodiment of the present disclosure;
FIG. 7 is a schematic flowchart of an image contrast enhancement method according to a further exemplary embodiment of the present disclosure;
FIG. 8 is a schematic flowchart of a training process of an image texture estimation model according to an exemplary embodiment of the present disclosure;
FIG. 9 is a schematic flowchart of an image contrast enhancement method according to a still further exemplary embodiment of the present disclosure;
FIG. 10 is a diagram of a structure of an image contrast enhancement apparatus according to an exemplary embodiment of the present disclosure;
FIG. 11 is a diagram of a structure of an image contrast enhancement apparatus according to another exemplary embodiment of the present disclosure; and
FIG. 12 is a diagram illustrating a structure of an electronic device according to an exemplary embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that the present disclosure is not limited by the exemplary embodiments.

It should be noted that, unless otherwise specifically stated, the relative arrangement of components and steps, numerical expressions, and numerical values set forth in these embodiments do not limit the scope of the present disclosure.

### Application Overview

Related methods such as global histogram equalization for image contrast enhancement have the following inherent defects when processing an image with complex content: differences in content characteristics between different regions are ignored because the related methods apply a uniform transformation to the entire image. This causes a flat region (such as sky or a wall) to be prone to noise amplification and over-enhancement after enhancement, resulting in unnatural blocky or grainy appearance; while for a texture detail region (such as an object edge or a complex pattern), details may not be effectively highlighted due to an insufficient enhancement intensity.

To solve the foregoing problems, this application provides a method that can adaptively enhance contrast based on image content, so as to implement differentiated and intelligent enhancement for different image regions, thereby improving adaptability and pertinence of image contrast enhancement.

### Exemplary Method

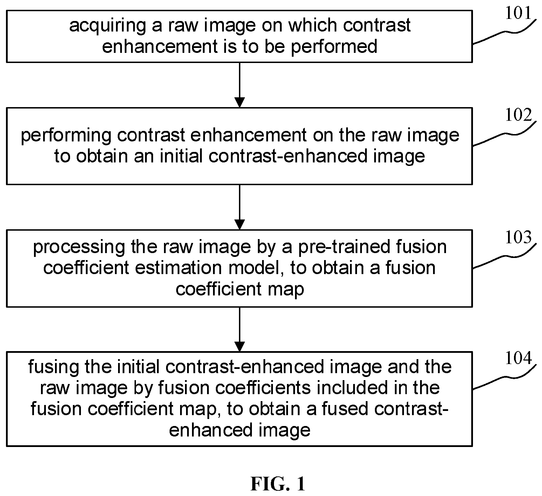

FIG. 1 is a schematic flowchart of an image contrast enhancement method according to an exemplary embodiment of the present disclosure. This embodiment may be applied to various types of electronic devices. As shown in FIG. 1, the following steps are included.

Step 101: Acquiring a raw image on which contrast enhancement is to be performed.

The raw image may be an image captured in any scenario, such as an image captured by a camera on a vehicle, or an image captured by a user by a mobile phone. Optionally, the raw image may be a grayscale image or a color image.

Step 102: Performing contrast enhancement on the raw image to obtain an initial contrast-enhanced image.

An electronic device executing this method may perform this step by various related contrast enhancement methods. Optionally, at least one of the following algorithms may be used for contrast enhancement: a histogram equalization algorithm, a linear contrast stretching algorithm, and a deep learning-based image contrast enhancement algorithm. The initial contrast-enhanced image may be a grayscale image, or a color image obtained by restoring the grayscale image.

Step 103: Processing the raw image by a pre-trained fusion coefficient estimation model, to obtain a fusion coefficient map.

Fusion coefficients in the fusion coefficient map are used to reduce a contrast enhancement intensity of a flat region in the raw image and to increase a contrast enhancement intensity of a texture region in the raw image. A size of the fusion coefficient map may be same as that of the raw image, that is, the fusion coefficients in the fusion coefficient map are in one-to-one correspondence to pixels in the raw image. The fusion coefficients in the fusion coefficient map may represent a proportion of grayscale values obtained from the initial contrast-enhanced image when a fused contrast-enhanced image is generated. To be specific, a larger fusion coefficient indicates a greater proportion of grayscale values from the initial contrast-enhanced image that are contained in the fused contrast-enhanced image; and a smaller fusion coefficient indicates a greater proportion of grayscale values from the raw image that are contained in the fused contrast-enhanced image.

Optionally, the fusion coefficient may use data capable of reflecting a texture degree (or a flatness degree) of a region where the pixel is located. Typically, a higher fusion coefficient indicates a greater probability that the corresponding pixel is in the texture region; and a lower fusion coefficient indicates a greater probability that the corresponding pixel is in the flat region.

The fusion coefficient estimation model is used to represent a correspondence between the raw image and the fusion coefficient map. The fusion coefficient estimation model may be constructed in various ways, such as setting a conversion formula for grayscale values, and training a neural network model through a machine learning method.

Optionally, when the fusion coefficient estimation model is trained by the machine learning method, a large amount of sample images may be collected in advance, and the fusion coefficient may be labeled for each pixel in each sample image. Subsequently, a parameter of an initial model is iteratively adjusted, so that an error between a fusion coefficient output by the model and the labeled fusion coefficient gradually decreases. When the error converges, the current initial model is used as a trained fusion coefficient estimation model.

Optionally, an image texture estimation model may also be used to perform texture probability estimation on the raw image, to obtain a texture probability estimation map; and then texture probability estimation values included in the texture probability estimation map are converted to obtain the fusion coefficient map.

Step 104: Fusing the initial contrast-enhanced image and the raw image by fusion coefficients included in the fusion coefficient map, to obtain a fused contrast-enhanced image.

Since the fusion coefficients included in the fusion coefficient map are in one-to-one correspondence to pixels included in the initial contrast-enhanced image, for a grayscale value of any pixel in the initial contrast-enhanced image and the raw image, calculation may be performed based on the corresponding fusion coefficient, so as to obtain a fused grayscale image. For example, an average of grayscale values of corresponding pixels in the initial contrast-enhanced image and the raw image may be multiplied by a corresponding fusion coefficient, to obtain the fused grayscale image.

According to actual requirements, the fused grayscale image may be used as the fused contrast-enhanced image, or the fused grayscale image may be restored to a color image to serve as the fused contrast-enhanced image.

According to the image contrast enhancement method provided in this embodiment of the present disclosure, the initial contrast-enhanced image is obtained by performing contrast enhancement on the raw image; the raw image is processed by the pre-trained fusion coefficient estimation model, to obtain the fusion coefficient map, where the fusion coefficients are used to reduce the contrast enhancement intensity of the flat region in the raw image, and to increase the contrast enhancement intensity of the texture region in the raw image; and finally, the initial contrast-enhanced image and the raw image are fused by the fusion coefficients included in the fusion coefficient map, to obtain the fused contrast-enhanced image. According to this embodiment of this application, contrast enhancement at different degrees is performed for different regions in a targeted manner based on texture intensities of different regions in the image. The fused contrast-enhanced image can effectively reflect differences in content characteristics in the image, so as to avoid noise amplification and over-enhancement of the flat region, and avoid insufficient contrast enhancement of the texture region, thereby enabling texture details to be effectively highlighted and improving adaptability and pertinence of image contrast enhancement.

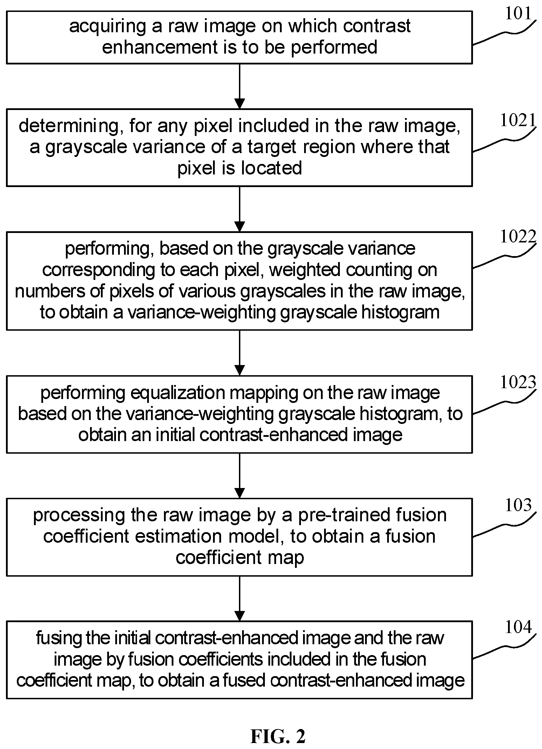

In some optional implementations, as shown in FIG. 2, step 102 includes the following steps.

Step 1021: Determining, for any pixel included in the raw image, a grayscale variance of a target region where that pixel is located.

The target region is an image region of a preset size with the any pixel as a reference point. A position of the reference point of each image region may be arbitrarily specified. Typically, the reference point may be a center point of the image region. The preset size may be arbitrarily set, for example, may be an image block of 3 × 3, 5 × 5, or other sizes.

A formula for calculating the grayscale variance is as follows: ${σ}^{2} = \frac{1}{N} {\sum }_{i = 1}^{N} {\left({x}_{i}-μ\right)}^{2}$

σ² represents the grayscale variance, *xᵢ* represents a grayscale value of an i^{th} pixel in the target region, *µ* represents an average grayscale value of all pixels, and N represents a number of pixels in the target region.

It should be understood that the preset size is a maximum size of each image region. In boundary and corner regions of the raw image, since a number of pixels surrounding the reference point does not meet a number of pixels specified by the preset size, a size of the image region corresponding to the reference point may be smaller than the preset size.

Step 1022: Performing, based on the grayscale variance corresponding to each pixel, weighted counting on numbers of pixels of various grayscales in the raw image, to obtain a variance-weighting grayscale histogram.

A grayscale histogram refers to counting of frequencies of occurrence of all pixels in the image based on grayscale values of the pixels. In other words, the grayscale histogram is a function of gray levels, representing a number of pixels having a certain gray level in the image.

Regarding a conventional histogram equalization mapping method, when counting a grayscale histogram, a number of corresponding pixels is counted for each grayscale value appearing in the image, separately. However, in this embodiment, when counting the grayscale histogram, each pixel is no longer counted as 1, but a corresponding counting weight is determined based on the grayscale variance corresponding to the pixel, and weighted counting is performed based on the counting weight, so as to obtain the variance-weighting grayscale histogram. Typically, a correspondence between the weight and the grayscale variance is: a larger grayscale variance indicates a larger counting number weight; while a smaller grayscale variance indicates a smaller counting number weight.

Step 1023: Performing equalization mapping on the raw image based on the variance-weighting grayscale histogram, to obtain the initial contrast-enhanced image.

The histogram-based equalization mapping method is an image processing technique that enhances image contrast by changing distribution of gray levels of the image. Main implementation steps include: calculating the grayscale histogram, a total number of pixels, a grayscale distribution frequency, and a cumulative distribution frequency; and then normalizing and mapping each pixel to a new gray level to finally obtain a contrast-enhanced image.

In this embodiment, during histogram equalization mapping, the variance-weighting grayscale histogram is used, which may reflect a weighted grayscale counting result. The weighted grayscale counting result may reflect a grayscale difference of a region where each pixel is located, that is, may reflect texture strength of the region where each pixel is located, so that contrast enhancement at different degrees may be performed for the texture region and the flat region of the obtained initial contrast-enhanced image, thereby improving adaptability of the initial contrast-enhanced image to texture features of the raw image.

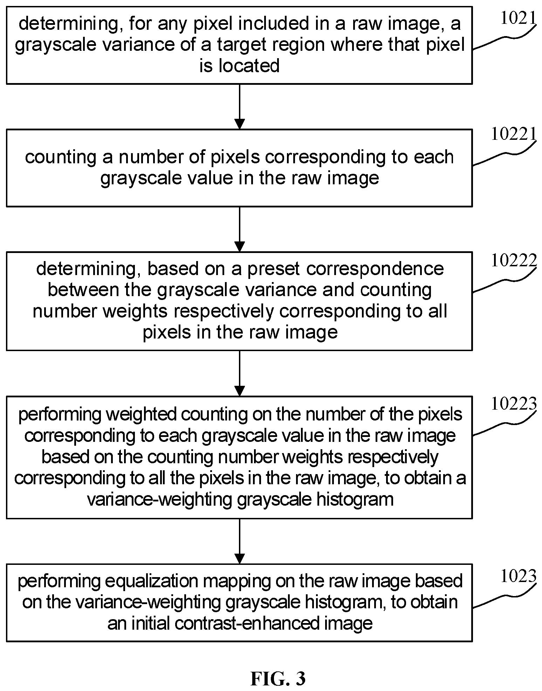

In some optional implementations, as shown in FIG. 3, step 1022 includes the following steps.

Step 10221: Counting a number of pixels corresponding to each grayscale value in the raw image.

To be specific, pixels having a same grayscale value in the raw image are counted, so as to determine the number of pixels corresponding to each grayscale value.

Step 10222: Determining, based on a preset correspondence between the grayscale variance and counting number weights respectively corresponding to all pixels in the raw image.

The counting number weight increases as the grayscale variance increases. The correspondence between the grayscale variance and the counting number weights may be expressed in a form of a table or a formula. A principle of reflecting this correspondence is: a larger grayscale variance indicates a larger counting number weight; while a smaller grayscale variance indicates a smaller counting number weight. For example, a mapping curve may be set, and the counting number weight corresponding to the grayscale variance may be determined based on the mapping curve.

Step 10223: Performing weighted counting on the number of the pixels corresponding to each grayscale value in the raw image based on the counting number weights respectively corresponding to all the pixels in the raw image, to obtain the variance-weighting grayscale histogram.

Specifically, when counting the number of the pixels corresponding to each grayscale value, for any pixel, the counting number weight corresponding to the each pixel may be calculated (such as multiplied or added) with a preset counting base (for example, 1), and an obtained calculation result is used as an actual counting increment of that pixel. The counting increment is accumulated into the number of the pixels corresponding to the grayscale value of that pixel. Optionally, the calculation result may be directly accumulated, or may be processed again (such as normalized) before being accumulated.

In this embodiment, by setting the correspondence between the grayscale variance and the counting number weight, the variance-weighting grayscale histogram may reflect a degree of grayscale value variation of the region where each pixel is located, that is, may reflect a texture degree of this region, so as to improve a matching degree between the variance-weighting grayscale histogram and a real scene, thereby helping to improve adaptability of image contrast enhancement.

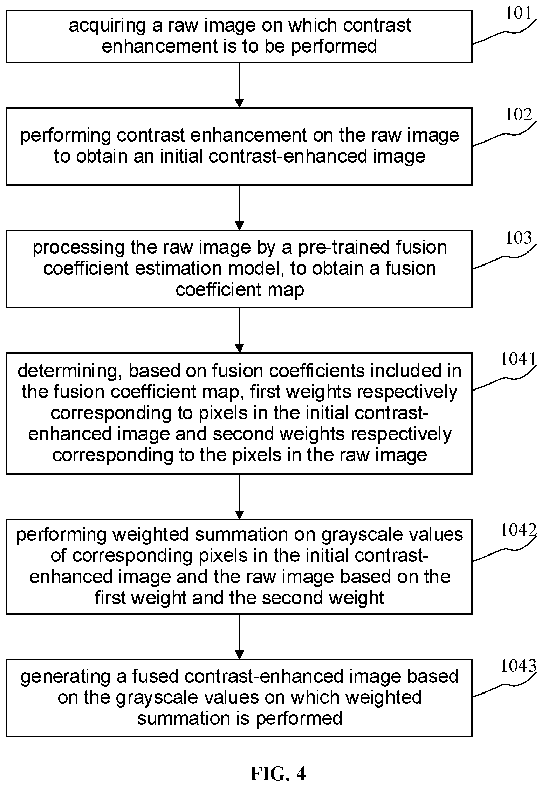

In some optional implementations, as shown in FIG. 4, step 104 includes the following steps.

Step 1041: Determining, based on the fusion coefficients included in the fusion coefficient map, first weights respectively corresponding to pixels in the initial contrast-enhanced image and second weights respectively corresponding to the pixels in the raw image.

Typically, a sum of the first weight and the second weight may be 1. Optionally, for any pixel in the initial contrast-enhanced image, the fusion coefficient corresponding to this pixel may be used as the first weight, and the corresponding second weight may be calculated accordingly. For example, if the fusion coefficient of a certain pixel is α, α may be used as a first weight w. In this case, the first weight w is obtained. Correspondingly, the second weight is 1-w.

Step 1042: Performing weighted summation on grayscale values of corresponding pixels in the initial contrast-enhanced image and the raw image based on the first weight and the second weight.

Specifically, the grayscale value of any pixel after fusion may be calculated according to the following formula: $I_final \left(x, y\right) = w ∗ I_enhanced \left(x, y\right) + \left(1-w\right) ∗ I_original \left(x, y\right)$

(x, y) presents a coordinate of a certain pixel, I_final(x, y) represents a grayscale value of a certain pixel in the fused grayscale image, w represents the first weight, 1-w represents the second weight, I_enhanced(x, y) represents the grayscale value corresponding to this pixel in the initial contrast-enhanced image, and I_original(x, y) represents the grayscale value corresponding to is pixel in the raw image.

It may be learned from formula (2) that, for a pixel with a high fusion coefficient, a higher possibility of being in the texture region indicates that more corresponding grayscale values in the initial contrast-enhanced image are retained, and a fusion result tends to perform high-intensity contrast enhancement on the texture region, to reflect richer texture details; and for a pixel with a low fusion coefficient, a higher possibility of being in the flat region indicates that more corresponding grayscale values in the raw image are retained, and the fusion result tends to preserve appearance of the raw image.

Step 1043: Generating the fused contrast-enhanced image based on the grayscale values on which weighted summation is performed.

Specifically, the grayscale values, on which weighted summation is performed, of the pixels may be combined as the fused grayscale image. According to actual requirements, the fused grayscale image may be used as the fused contrast-enhanced image, or the fused grayscale image may be restored to a color image to serve as the fused contrast-enhanced image.

In this embodiment, the weights of the corresponding pixels in the initial contrast-enhanced image and the raw image are determined by the fusion coefficients, and grayscale value fusion is performed by the weights. In this way, in the fused contrast-enhanced image, high-intensity contrast enhancement may be performed on the texture region, and the appearance of the raw image may be preserved for the flat region, so that the contrast-enhanced image can more realistically reflect appearance characteristics of the real scene.

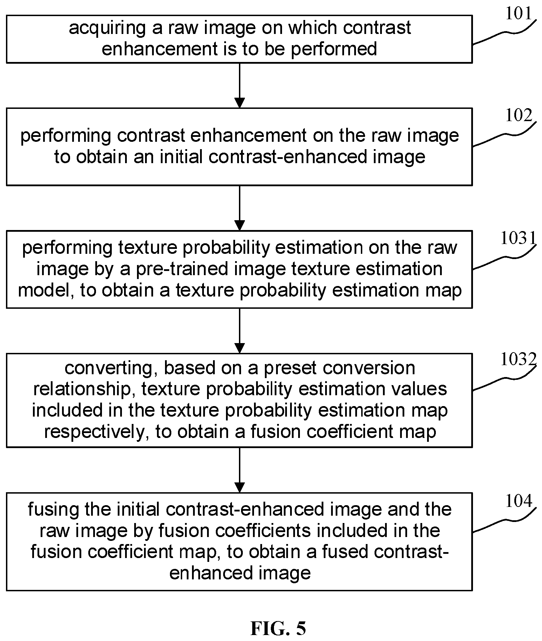

In some optional implementations, as shown in FIG. 5, step 103 includes the following steps.

Step 1031: Performing texture probability estimation on the raw image by a pre-trained image texture estimation model, to obtain a texture probability estimation map.

Texture probability estimation values included in the texture probability estimation map are in one-to-one correspondence to the pixels included in the raw image.

The texture probability estimation values included in the texture probability estimation map are in one-to-one correspondence to the pixels included in the raw image. The texture probability estimation value indicates a probability that the corresponding pixel is in the texture region. A larger texture probability estimation value indicates a greater possibility that the corresponding pixel is in the texture region; while a smaller texture probability estimation value indicates a greater possibility that the corresponding pixel is in the flat region.

The image texture estimation model may be pre-trained through a machine learning method. For example, a large amount of sample images may be collected in advance, and a texture probability value may be labeled for each pixel in each sample image. Subsequently, the parameter of the initial model is iteratively adjusted, so that an error between a predicted texture probability estimation map output by the model and the labeled texture probability estimation map gradually decreases. When the error converges, the current initial model is used as a trained image texture estimation model.

Step 1032: Converting, based on a preset conversion relationship, the texture probability estimation values included in the texture probability estimation map respectively, to obtain the fusion coefficient map.

The conversion relationship may be preset, and may be expressed in a form of a calculation formula or a correspondence table. By the conversion relationship, each texture probability estimation value may be converted into a fusion coefficient. The obtained fusion coefficients are combined into a fusion coefficient map.

Typically, there may be a positive relationship between the texture probability estimation value and the fusion coefficient. To be specific, a larger texture probability estimation value indicates a greater probability that the corresponding pixel belongs to the texture region, and correspondingly, the corresponding fusion coefficient is larger. Through a larger fusion coefficient, the grayscale value may be obtained from the initial contrast-enhanced image to a greater extent, playing a role of enhancing contrast of the texture details to a greater extent. A smaller texture probability estimation value indicates a smaller probability that the corresponding pixel belongs to the texture region, and correspondingly, the corresponding fusion coefficient is smaller. Through a smaller fusion coefficient, the grayscale value may be obtained from the raw image to a greater extent, playing a role of preserving original appearance characteristics of the flat region to a greater extent.

In this embodiment, the corresponding fusion coefficients are determined in a targeted manner based on texture probabilities of regions in the image by performing texture probability estimation on the raw image by the image texture estimation model, and then converting the texture probability estimation values to obtain the fusion coefficient map, which helps to improve accuracy of generating the fusion coefficients.

In some optional implementations, step 1032 may include:

mapping, by a preset mapping function, the texture probability estimation values included in the texture probability estimation map to fusion coefficients respectively, to obtain the fusion coefficient map.

The mapping function may reflect a relationship between the texture probability estimation value and the fusion coefficient. A form of the mapping function may be arbitrarily set. Typically, an objective of setting the mapping function is to make the fusion coefficient of the texture region larger, and make the fusion coefficient of the flat region smaller.

In this embodiment, by setting the mapping function, any texture probability estimation value may be mapped to a fusion coefficient in a targeted manner, so that the fusion coefficient corresponding to each pixel may more accurately reflect the texture degree of the region where the pixel is located.

In some optional implementations, the mapping function is a monotonically increasing mapping function.

The fusion coefficient map may be calculated according to the following steps:

for any texture probability estimation value included in the texture probability estimation map, using the monotonically increasing mapping function to map the texture probability estimation value to a first fusion coefficient when the texture probability estimation value indicates that the corresponding pixel is located in the texture region; and map the texture probability estimation value to a second fusion coefficient when the texture probability estimation value indicates that the corresponding pixel is located in the flat region.

The first fusion coefficient is greater than the second fusion coefficient.

A form of the monotonically increasing mapping function may be arbitrarily set. For example, the monotonically increasing mapping function may be α = a + β * p, where a and β are adjustable hyperparameters greater than 0, and p is the texture probability estimation value. Significance of this function is: when p corresponding to a certain pixel is close to 1, it indicates that the pixel is in the texture region, and the corresponding α is close to a + β, playing a role of increasing the contrast enhancement intensity; when p is close to 0, it indicates that the pixel is in the flat region, and the corresponding α is close to a, playing a role of reducing the contrast enhancement intensity.

In this embodiment, by setting the monotonically increasing mapping function, the texture region and the flat region may respectively correspond to fusion coefficients of different magnitudes, and regional pertinence and accuracy of image contrast enhancement become higher.

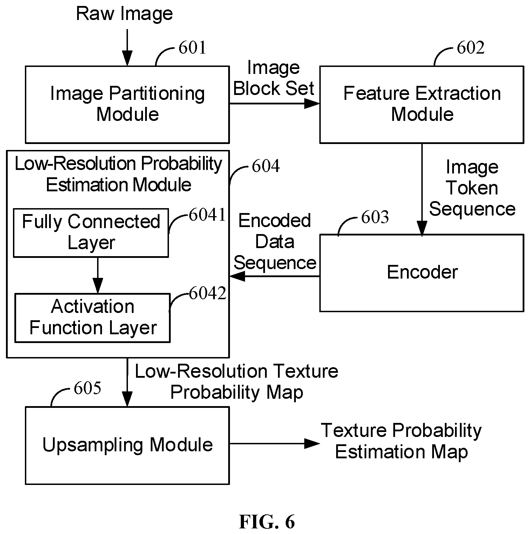

In some optional implementations, as shown in FIG. 6, the image texture estimation model includes an image partitioning module 601, a feature extraction module 602, an encoder 603, a low-resolution probability estimation module 604, and an upsampling module 605.

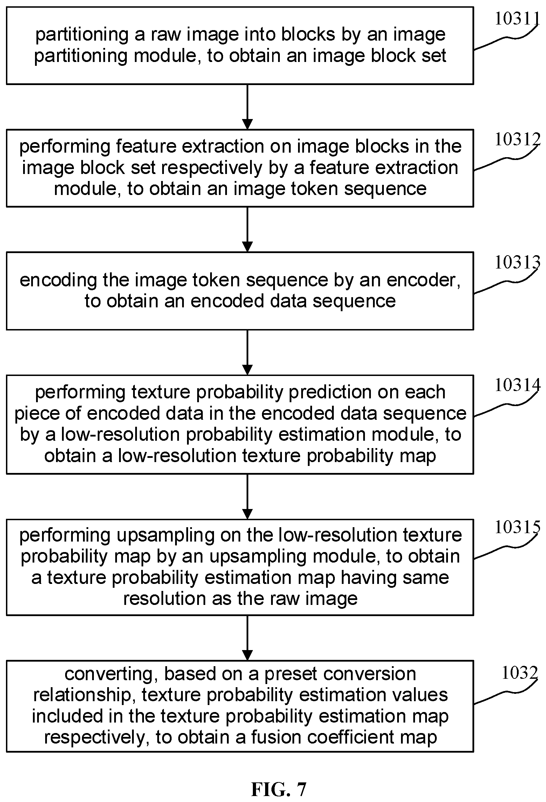

As shown in FIG. 7, step 1031 includes the following steps.

Step 10311: Partitioning the raw image into blocks by the image partitioning module, to obtain an image block set.

This embodiment does not limit a manner of partitioning the image. For example, a convolutional layer with a kernel size and a stride both being P (for example, 16) may be used as the image partitioning module to perform convolution processing on the input raw image, so as to divide the image into a plurality of non-overlapping image blocks with a size of P × P.

Step 10312: Performing feature extraction on image blocks in the image block set respectively by the feature extraction module, to obtain an image token sequence.

Each image token in the image token sequence corresponds to one image block.

The feature extraction module may be implemented through a learnable linear projection layer. The feature extraction module may flatten each image block into a vector, and map the vector to a fixed-dimensional embedding space through the linear projection layer (typically a fully connected layer). For example, each image token in the image token sequence is a feature vector of a size of 1 × C, where C is a feature dimension. The image token sequence may form a feature map with a size of (H/P) × (W/P) × C, where H and W are height and width of the raw image.

Step 10313: Encoding the image token sequence by the encoder, to obtain an encoded data sequence.

Each piece of encoded data in the encoded data sequence is obtained by encoding a corresponding image token by the encoder. Optionally, the encoder may be a deformable Transformer encoder. The token sequence is input into a deformable Transformer encoder composed of a plurality of (for example, 2-4) stacked encoding blocks. A deformable self-attention mechanism of the encoder allows a model to dynamically attend to other blocks most relevant to determining content of a current image block, so as to more effectively capture global context information, thereby being conducive to accurately determining whether an image block belongs to the texture region or the flat region.

Step 10314: Performing texture probability prediction on each piece of encoded data in the encoded data sequence by the low-resolution probability estimation module, to obtain a low-resolution texture probability map.

Specifically, each piece of encoded data in the encoded data sequence may be input into the low-resolution probability estimation module, which respectively performs texture probability prediction on the encoded data to obtain a corresponding texture probability value for each piece of encoded data. The texture probability values form the low-resolution texture probability map. A size of the low-resolution texture probability map is (H/P) × (W/P), and a value of each point on the map is between 0 and 1, representing a probability that the image block included in the raw image belongs to the texture region.

Step 10315: Performing upsampling on the low-resolution texture probability map by the upsampling module, to obtain a texture probability estimation map having same resolution as the raw image.

The upsampling module may be implemented based on a related interpolation algorithm. For example, a bilinear interpolation algorithm may be used to upsample the low-resolution texture probability map P_low to full resolution H × W of the raw image, to obtain a full-resolution texture probability estimation map P_full. The bilinear interpolation algorithm can produce smooth transitions, effectively avoiding block effects in the final fusion coefficient map.

In this embodiment, the image partitioning module, the feature extraction module, the encoder, the low-resolution probability estimation module, and the upsampling module are disposed to constitute the image texture estimation model, so that texture probability estimation is performed based on a deep learning model, thereby effectively improving accuracy of texture probability estimation.

In some optional implementations, as shown in FIG. 6, the low-resolution probability estimation module 604 includes a fully connected layer 6041 and an activation function layer 6042.

Step 10314 may be performed as below.

First, each piece of encoded data in the encoded data sequence is mapped to a texture feature estimation value by the fully connected layer, respectively.

Subsequently, obtained texture feature estimation values are respectively converted to low-resolution texture probability values by the activation function layer, to obtain the low-resolution texture probability map.

A function of the fully connected layer is to integrate features extracted by preceding layers of the image texture estimation model, and output data for classification. A type of an activation function used by the activation function layer is typically a sigmoid activation function, and optionally, may also be another activation function, such as a tanh activation function. A function of the activation function layer is to perform binary classification on the texture feature estimation values, and output a probability indicating that a corresponding image region is the texture region.

In this embodiment, by disposing the fully connected layer and the activation function layer in the low-resolution probability estimation module, accurate texture probability prediction is performed for each piece of encoded data, thereby improving accuracy of generating the texture probability estimation map.

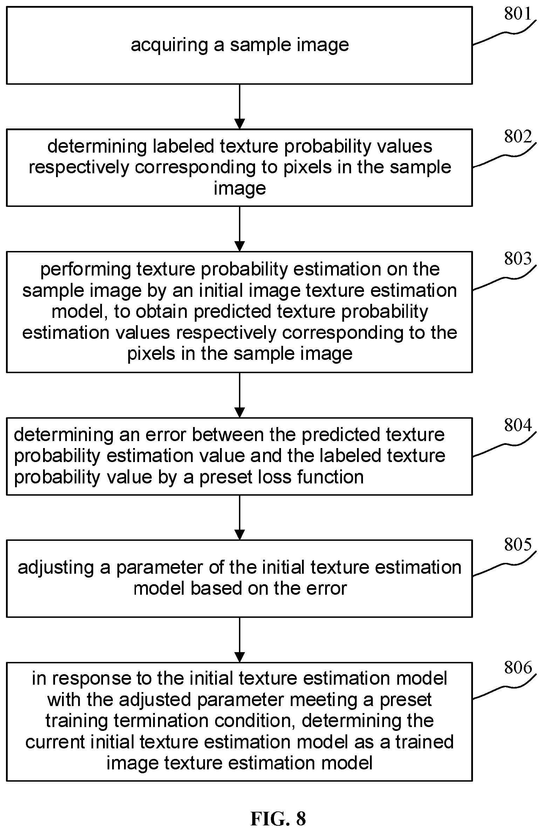

In some optional implementations, as shown in FIG. 8, the image texture estimation model is pre-trained according to the following steps.

Step 801: Acquiring a sample image.

The sample image may be an image obtained by capturing a certain type of scenario in advance. An application scenario of the image contrast enhancement method provided in this embodiment of the present disclosure belongs to this type of scenario. Optionally, the sample image may be a grayscale image or a color image.

Step 802: Determining labeled texture probability values respectively corresponding to pixels in the sample image.

The labeled texture probability value is a label between 0 and 1 that is manually labeled in advance for each pixel. Typically, to improve labeling efficiency, the sample image may be divided, and each image block obtained through the division has a size of P × P. An annotator may label each image block with a label between 0 and 1, respectively. Finally, labels form a matrix of (H/P) × (W/P), where each value in the matrix represents a probability that a region at a corresponding position is the texture region.

Step 803: Performing texture probability estimation on the sample image by an initial image texture estimation model, to obtain predicted texture probability estimation values respectively corresponding to the pixels in the sample image.

A structure of the initial image texture estimation model may be constructed by various related neural network models, for example, may be a structure shown in FIG. 6. The initial image texture estimation model may perform texture probability estimation on the sample image according to a process shown in FIG. 7.

Step 804: Determining an error between the predicted texture probability estimation value and the labeled texture probability value by a preset loss function.

The loss function may be various related types of loss functions, such as an L1 loss function. A loss value is a mean absolute error between a texture probability value predicted by a network and a true label. This loss function is insensitive to outliers, enabling training to be more stable.

Step 805: Adjusting a parameter of the initial texture estimation model based on the error.

Typically, a gradient descent method and a back-propagation method may be adopted to iteratively adjust the parameter of the initial texture estimation model, until the model meets the training termination condition.

Step 806: In response to the initial texture estimation model with the adjusted parameter meeting a preset training termination condition, determining the current initial texture estimation model as a trained image texture estimation model.

Optionally, the training termination condition may include at least one of the following: loss value converge, a number of training reaches a preset number, and training duration reaches preset duration.

The method for training the image texture estimation model that is provided in this embodiment can make the training process of the model adapted to an actual application scenario, thereby improving accuracy of the model in performing texture probability estimation.

In some optional implementations, step 802 may be performed as below.

First, the sample image is partitioned into blocks to obtain a sample block region set.

Subsequently, for each sample block region in the sample block region set, a proportion of a texture-region area in the sample block region is determined, and the proportion is determined as the labeled texture probability value of each pixel included in the sample block region.

The texture region in any sample block region may be defined manually, or automatically defined by other texture recognition models.

In this embodiment, the proportion of the texture-region area is used as a labeled texture probability value during labeling of the sample image, which can simplify the labeling process and improve labeling efficiency and model training efficiency.

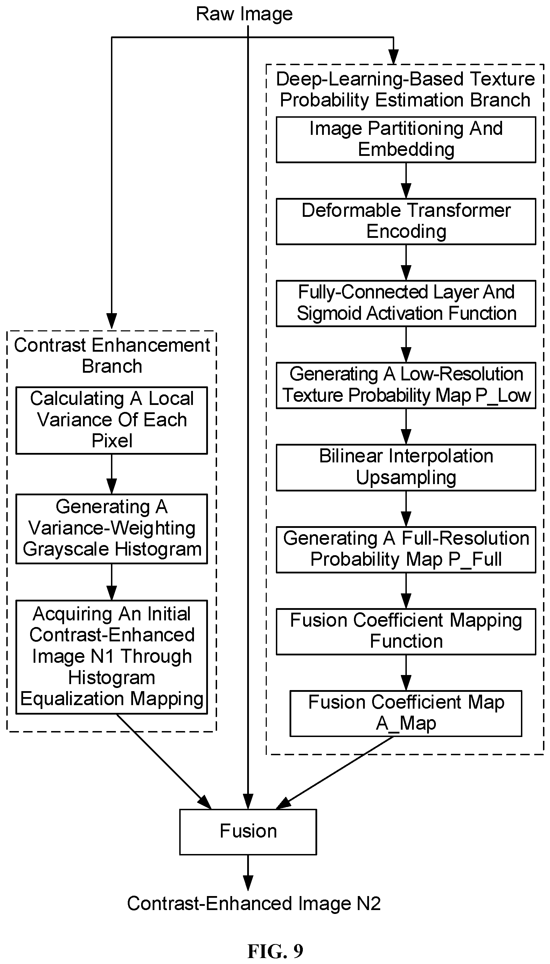

In combination with all the foregoing embodiments, FIG. 9 shows an exemplary flowchart according to an embodiment of the present disclosure. The flow includes two main branches, which respectively are a contrast enhancement branch and a deep-learning-based texture probability estimation branch. The two branches may be processed in parallel. The contrast enhancement branch generates a variance-weighting grayscale histogram by calculating a local variance of each pixel, and then obtains the initial contrast-enhanced image through histogram equalization mapping (referring to embodiments corresponding to FIG. 2 and FIG. 3 described above). The deep-learning-based texture probability estimation branch generates the low-resolution texture probability map P_low sequentially through image partitioning and embedding, deformable Transformer encoding, the fully-connected layer, and the Sigmoid activation function. Subsequently, a full-resolution probability map P_full is generated through bilinear interpolation upsampling, and a fusion coefficient mapping function is used to map the full-resolution probability map P_full to a fusion coefficient map α_map. Finally, the fusion coefficient map α_map is used to perform weighted fusion on an initial contrast-enhanced image N1 output by the contrast enhancement branch and the raw image, to obtain the final contrast-enhanced image.

### Exemplary Apparatus

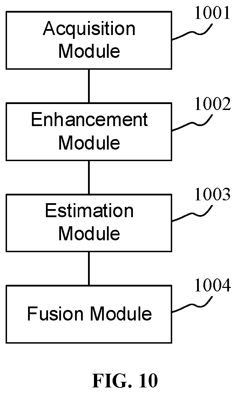

FIG. 10 is a schematic diagram of a structure of an image contrast enhancement apparatus according to an exemplary embodiment of the present disclosure. This embodiment may be applied to an electronic device. As shown in FIG. 10, the image contrast enhancement apparatus includes:
an acquisition module 1001, configured to acquire a raw image on which contrast enhancement is to be performed;
an enhancement module 1002, configured to perform contrast enhancement on the raw image to obtain an initial contrast-enhanced image;
an estimation module 1003, configured to process the raw image by a pre-trained fusion coefficient estimation model, to obtain a fusion coefficient map with fusion coefficients for reducing a contrast enhancement intensity of a flat region in the raw image and increasing a contrast enhancement intensity of a texture region in the raw image; and
a fusion module 1004, configured to fuse the initial contrast-enhanced image and the raw image by the fusion coefficients included in the fusion coefficient map, to obtain a fused contrast-enhanced image.

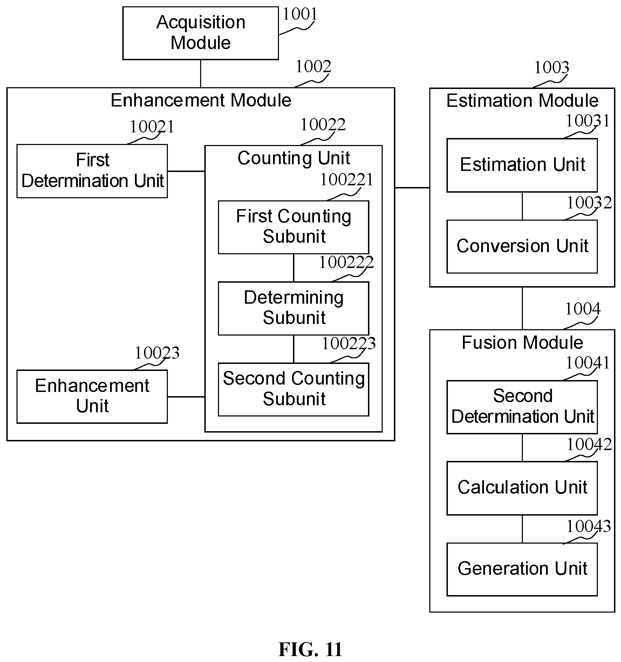

Referring to FIG. 11, FIG. 11 is a schematic diagram of a structure of an image contrast enhancement apparatus according to another exemplary embodiment of the present disclosure.

In some optional implementations, the enhancement module 1002 includes: a first determination unit 10021, configured to determine, for any pixel included in the raw image, a grayscale variance of a target region where that pixel is located, where the target region is an image region of a preset size with the any pixel as a reference point; a counting unit 10022, configured to perform, based on the grayscale variance corresponding to each pixel, weighted counting on numbers of pixels of various grayscales in the raw image, to obtain a variance-weighting grayscale histogram; and an enhancement unit 10023, configured to perform equalization mapping on the raw image based on the variance-weighting grayscale histogram, to obtain the initial contrast-enhanced image.

In some optional implementations, the counting unit 10022 includes: a first counting subunit 100221, configured to count a number of pixels corresponding to each grayscale value in the raw image; a determining subunit 100222, configured to determine, based on a preset correspondence between the grayscale variance and counting number weights respectively corresponding to all pixels in the raw image, where the counting number weight increases as the grayscale variance increases; and a second counting subunit 100223, configured to perform weighted counting on the number of the pixels corresponding to each grayscale value in the raw image based on the counting number weights respectively corresponding to all the pixels in the raw image, to obtain the variance-weighting grayscale histogram.

In some optional implementations, the fusion module 1004 includes: a second determination unit 10041, configured to determine, based on the fusion coefficients included in the fusion coefficient map, first weights respectively corresponding to pixels in the initial contrast-enhanced image and second weights respectively corresponding to the pixels in the raw image; a calculation unit 10042, configured to perform weighted summation on grayscale values of corresponding pixels in the initial contrast-enhanced image and the raw image based on the first weight and the second weight; and a generation unit 10043, configured to generate the fused contrast-enhanced image based on the grayscale values on which weighted summation is performed.

In some optional implementations, the estimation module 1003 includes: an estimation unit 10031, configured to perform texture probability estimation on the raw image by a pre-trained image texture estimation model, to obtain a texture probability estimation map with texture probability estimation values in one-to-one correspondence to the pixels included in the raw image; and a conversion unit 10032, configured to convert, based on a preset conversion relationship, the texture probability estimation values included in the texture probability estimation map respectively, to obtain the fusion coefficient map.

In some optional implementations, the conversion unit 10032 is further configured to: map, by a preset mapping function, the texture probability estimation values included in the texture probability estimation map to fusion coefficients respectively, to obtain the fusion coefficient map.

In some optional implementations, the mapping function is a monotonically increasing mapping function; and the conversion unit 10032 is further configured to: for any texture probability estimation value included in the texture probability estimation map, use the monotonically increasing mapping function to map the texture probability estimation value to a first fusion coefficient when the texture probability estimation value indicates that the corresponding pixel is located in the texture region; and map the texture probability estimation value to a second fusion coefficient when the texture probability estimation value indicates that the corresponding pixel is located in the flat region, where the first fusion coefficient is greater than the second fusion coefficient.

In some optional implementations, the image texture estimation model includes an image partitioning module, a feature extraction module, an encoder, a low-resolution probability estimation module, and an upsampling module; and the estimation unit 10031 is further configured to: partition the raw image into blocks by the image partitioning module, to obtain an image block set; perform feature extraction on image blocks in the image block set respectively by the feature extraction module, to obtain an image token sequence, where each image token in the image token sequence corresponds to one image block; encode the image token sequence by the encoder, to obtain an encoded data sequence; perform texture probability prediction on each piece of encoded data in the encoded data sequence by the low-resolution probability estimation module, to obtain a low-resolution texture probability map; and perform upsampling on the low-resolution texture probability map by the upsampling module, to obtain a texture probability estimation map having same resolution as the raw image.

In some optional implementations, the low-resolution probability estimation module includes a fully connected layer and an activation function layer; and the estimation unit 10031 is further configured to: map, by the fully connected layer, each piece of encoded data in the encoded data sequence to a texture feature estimation value, respectively; and convert, by the activation function layer, obtained texture feature estimation values to low-resolution texture probability values respectively, to obtain the low-resolution texture probability map.

In some optional implementations, the image texture estimation model is pre-trained according to the following steps: acquiring a sample image; determining labeled texture probability values respectively corresponding to pixels in the sample image; performing texture probability estimation on the sample image by an initial image texture estimation model, to obtain predicted texture probability estimation values respectively corresponding to the pixels in the sample image; determining an error between the predicted texture probability estimation value and the labeled texture probability value by a preset loss function; adjusting a parameter of the initial texture estimation model based on the error; and in a case where the initial texture estimation model with the adjusted parameter meets a preset training termination condition, determining the current initial texture estimation model as a trained image texture estimation model.

In some optional implementations, the determining labeled texture probability values respectively corresponding to pixels in the sample image includes: partitioning the sample image into blocks to obtain a sample block region set; and determining, for each sample block region in the sample block region set, a proportion of a texture-region area in the sample block region, and determining the proportion as the labeled texture probability value of each pixel included in the sample block region.

The exemplary apparatus embodiment corresponds to the section of exemplary method in terms of implementation, and corresponding content between the two may be cross-referenced, combined, and cited. Details are not described herein. For beneficial technical effects corresponding to the exemplary embodiment of this apparatus, refer to the corresponding beneficial technical effects of the exemplary method section described above, which are not repeated herein.

### Exemplary electronic device

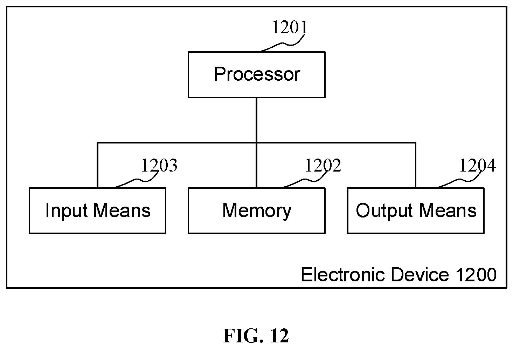

FIG. 12 is a diagram of a structure of an electronic device 1200 according to an embodiment of the present disclosure. The electronic device includes at least one processor 1201 and a memory 1202.

The processor 1201 may be a central processing unit (CPU) or another form of processing unit having a data processing capability and/or an instruction execution capability, and may control another component in the electronic device 1200 to perform a desired function.

The memory 1202 may include one or more computer program products, which may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. One or more computer program instructions may be stored on the computer readable storage medium. The processor 1201 may run the one or more program instructions to implement the image contrast enhancement method according to various embodiments of the present disclosure that are described above and/or other desired functions.

In an example, the electronic device 1200 may further include an input means 1203 and an output means 1204. These components are interconnected through a bus system and/or other forms of connection mechanisms (not shown).

The input means 1203 may further include, for example, a keyboard or a mouse.

The output means 1204 may output various information to the outside, and may include, for example, a display, a loudspeaker, a printer, a communication network, and a remote output means connected to the communication network.

Certainly, for simplicity, FIG. 12 shows only some of the components in the electronic device 1200 that are related to the present disclosure, and components such as a bus and an input/output interface are omitted. In addition, according to specific applications, the electronic device 1200 may also include any other appropriate components.

### Exemplary Computer Program Product And Computer Readable Storage Medium

In addition to the foregoing methods and devices, embodiments of the present disclosure may also provide a computer program product including computer program instructions that, when run by a processor, cause the processor to perform the steps, of the image contrast enhancement method according to the embodiments of the present disclosure, that are described in the "Exemplary method" section described above.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, cause the processor to perform the steps, of the image contrast enhancement method according to the embodiments of the present disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples rather than limitations, and it cannot be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily adopting the foregoing specific details for implementation.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. An image contrast enhancement method, the method comprising:
acquiring (101) a raw image on which contrast enhancement is to be performed;
performing (102) contrast enhancement on the raw image to obtain an initial contrast-enhanced image;
processing (103) the raw image by a pre-trained fusion coefficient estimation model, to obtain a fusion coefficient map with fusion coefficients for reducing a contrast enhancement intensity of a flat region in the raw image and increasing a contrast enhancement intensity of a texture region in the raw image; and
fusing (104) the initial contrast-enhanced image and the raw image by the fusion coefficients comprised in the fusion coefficient map, to obtain a fused contrast-enhanced image.

2. The method according to claim 1, wherein the performing (102) contrast enhancement on the raw image to obtain an initial contrast-enhanced image comprises:
determining (1021), for any pixel comprised in the raw image, a grayscale variance of a target region where that pixel is located, wherein the target region is an image region of a preset size with the any pixel as a reference point;
performing (1022), based on the grayscale variance corresponding to each pixel, weighted counting on numbers of pixels of various grayscales in the raw image, to obtain a variance-weighting grayscale histogram; and
performing (1023) equalization mapping on the raw image based on the variance-weighting grayscale histogram, to obtain the initial contrast-enhanced image.

3. The method according to claim 2, wherein the performing (1022), based on the grayscale variance corresponding to each pixel, weighted counting on numbers of pixels of various grayscales in the raw image, to obtain a variance-weighting grayscale histogram comprises:
counting (10221) a number of pixels corresponding to each grayscale value in the raw image;
determining (10222), based on a preset correspondence between the grayscale variance and counting number weights respectively corresponding to all pixels in the raw image, wherein the counting number weight increases as the grayscale variance increases; and
performing (10223) weighted counting on the number of the pixels corresponding to each grayscale value in the raw image based on the counting number weights respectively corresponding to all the pixels in the raw image, to obtain the variance-weighting grayscale histogram.

4. The method according to claim 1, wherein the fusing (104) the initial contrast-enhanced image and the raw image by the fusion coefficients comprised in the fusion coefficient map, to obtain a fused contrast-enhanced image comprises:
determining (1041), based on the fusion coefficients comprised in the fusion coefficient map, first weights respectively corresponding to pixels in the initial contrast-enhanced image and second weights respectively corresponding to the pixels in the raw image;
performing (1042) weighted summation on grayscale values of corresponding pixels in the initial contrast-enhanced image and the raw image based on the first weight and the second weight; and
generating (1043) the fused contrast-enhanced image based on the grayscale values on which weighted summation is performed.

5. The method according to any one of claims 1 to 4, wherein the processing (103) the raw image by a pre-trained fusion coefficient estimation model, to obtain a fusion coefficient map comprises:
performing (1031) texture probability estimation on the raw image by a pre-trained image texture estimation model, to obtain a texture probability estimation map with texture probability estimation values in one-to-one correspondence to the pixels comprised in the raw image; and
converting (1032), based on a preset conversion relationship, the texture probability estimation values comprised in the texture probability estimation map respectively, to obtain the fusion coefficient map.

6. The method according to claim 5, wherein the converting (1032), based on a preset conversion relationship, the texture probability estimation values comprised in the texture probability estimation map respectively, to obtain the fusion coefficient comprises:
mapping, by a preset mapping function, the texture probability estimation values comprised in the texture probability estimation map to fusion coefficients respectively, to obtain the fusion coefficient map.

7. The method according to claim 6, wherein the mapping function is a monotonically increasing mapping function; and
the mapping, by a preset mapping function, the texture probability estimation values comprised in the texture probability estimation map to fusion coefficients respectively, to obtain the fusion coefficient map comprises:
mapping, for any texture probability estimation value comprised in the texture probability estimation map, the texture probability estimation value to a first fusion coefficient when the texture probability estimation value indicates that the corresponding pixel is located in the texture region by the monotonically increasing mapping function, and to a second fusion coefficient when the texture probability estimation value indicates that the corresponding pixel is located in the flat region, wherein the first fusion coefficient is greater than the second fusion coefficient.

8. The method according to claim 5, wherein the image texture estimation model comprises an image partitioning module, a feature extraction module, an encoder, a low-resolution probability estimation module, and an upsampling module; and
the performing (1031) texture probability estimation on the raw image by a pre-trained image texture estimation model, to obtain a texture probability estimation map comprises:
partitioning (10311) the raw image into blocks by the image partitioning module, to obtain an image block set;
performing (10312) feature extraction on image blocks in the image block set respectively by the feature extraction module, to obtain an image token sequence, wherein each image token in the image token sequence corresponds to one image block;
encoding (10313) the image token sequence by the encoder, to obtain an encoded data sequence;
performing (10314) texture probability prediction on each piece of encoded data in the encoded data sequence by the low-resolution probability estimation module, to obtain a low-resolution texture probability map; and
performing (10315) upsampling on the low-resolution texture probability map by the upsampling module, to obtain a texture probability estimation map having same resolution as the raw image.

9. The method according to claim 8, wherein the low-resolution probability estimation module comprises a fully connected layer and an activation function layer; and
the performing (10314) texture probability prediction on each piece of encoded data in the encoded data sequence by the low-resolution probability estimation module, to obtain a low-resolution texture probability map comprises:
mapping, by the fully connected layer, each piece of encoded data in the encoded data sequence to a texture feature estimation value, respectively; and
converting, by the activation function layer, obtained texture feature estimation values to low-resolution texture probability values respectively, to obtain the low-resolution texture probability map.

10. The method according to claim 5, wherein the image texture estimation model is pre-trained through:
acquiring (801) a sample image;
determining (802) labeled texture probability values respectively corresponding to pixels in the sample image;
performing (803) texture probability estimation on the sample image by an initial image texture estimation model, to obtain predicted texture probability estimation values respectively corresponding to the pixels in the sample image;
determining (804) an error between the predicted texture probability estimation value and the labeled texture probability value by a preset loss function;
adjusting (805) a parameter of the initial texture estimation model based on the error; and
in response to the initial texture estimation model with the adjusted parameter meeting a preset training termination condition, determining (806) the current initial texture estimation model as a trained image texture estimation model.

11. The method according to claim 10, wherein the determining (802) labeled texture probability values respectively corresponding to pixels in the sample image comprises:
partitioning the sample image into blocks to obtain a sample block region set; and
determining, for each sample block region in the sample block region set, a proportion of a texture-region area in the sample block region, and determining the proportion as the labeled texture probability value of each pixel comprised in the sample block region.

12. An image contrast enhancement apparatus, comprising:
an acquisition module (1001), configured to acquire a raw image on which contrast enhancement is to be performed;
an enhancement module (1002), configured to perform contrast enhancement on the raw image to obtain an initial contrast-enhanced image;
an estimation module (1003), configured to process the raw image by a pre-trained fusion coefficient estimation model, to obtain a fusion coefficient map with fusion coefficients for reducing a contrast enhancement intensity of a flat region in the raw image and increasing a contrast enhancement intensity of a texture region in the raw image; and
a fusion module (1004), configured to fuse the initial contrast-enhanced image and the raw image by the fusion coefficients comprised in the fusion coefficient map, to obtain a fused contrast-enhanced image.

13. The image contrast enhancement apparatus according to claim 12, wherein the enhancement module (1002) comprises:
a first determination unit (10021), configured to determine, for any pixel comprised in the raw image, a grayscale variance of a target region where that pixel is located, wherein the target region is an image region of a preset size with the any pixel as a reference point;
a counting unit (10022), configured to perform, based on the grayscale variance corresponding to each pixel, weighted counting on numbers of pixels of various grayscales in the raw image, to obtain a variance-weighting grayscale histogram; and
an enhancement unit (10023), configured to perform equalization mapping on the raw image based on the variance-weighting grayscale histogram, to obtain the initial contrast-enhanced image.

14. A non-transitory computer readable storage medium, on which a computer program is stored, where the computer program, when executed by a processor (1201), causes the processor (1201) to implement the image contrast enhancement method according to any one of claims 1 to 11.

15. An electronic device (1200), comprising:
a processor (1201); and
a memory (1202), configured to store instructions executable by the processor (1201), wherein
the processor (1201) is configured to read the executable instructions from the memory (1202), and execute the instructions to implement the image contrast enhancement method according to any one of claims 1 to 11.
